# EUROPEAN PATENT APPLICATION

(11) **EP 3 683 894 A1**
(43) Date of publication of application: **22.07.2020**
(21) Application number: 20151619.2
(22) Date of filing: 14.01.2020
(51) Int. Cl.: H01R 11/12, H01R 13/52, H01R 13/405, H01R 13/58, B29C 45/00, H01B 3/00

(54) **WATERPROOF STRUCTURE**

(30) Priority: 15.01.2019 JP 2019004452
(71) Applicant: YAZAKI CORPORATION, Minato-ku, Tokyo 108-8333 (JP)
(72) Inventor: IIZUKA, Hayato, Kakegawa-shi, Shizuoka (JP); TSUTAGAWA, Yusuke, Kakegawa-shi, Tokyo (JP); KAYO, Kazuma, Kakegawa-shi, Tokyo (JP); KATO, Hajime, Kakegawa-shi, Tokyo (JP)
(74) Representative: Grünecker Patent- und Rechtsanwälte PartG mbB

(57) **Abstract**

A waterproof structure includes a seal portion covering around an electric wire to be inserted into a mounting hole of an object to which the electric wire is mounted, the electric wire having a conductor and an insulation covering the conductor, and the seal portion being elastic and electrically insulative and a housing covering an end portion of the electric wire such that the housing overlaps the seal portion, the housing being made of an insulating resin having higher rigidity than the seal portion. The seal portion includes a first portion including one end of the seal portion and over which the housing overlaps the seal portion and a second portion other than the first portion and over which the housing does not overlap the seal portion, the first portion being smaller in outer diameter than the second portion.

## Description

### TECHNICAL FIELD

The present invention relates to a waterproof structure.

### BACKGROUND

A related art waterproof structure is configured to provide waterproof property between a mounting hole of an object to which an electric wire is mounted and the electric wire to be inserted into the mounting hole (see, e.g., JP-2014-7112A). The connector includes a seal portion and a housing. The seal portion is formed of an insulating elastic material that integrally covers an insulation of the electric wire and the housing is formed of an insulating resin having higher rigidity than the elastic material that integrally covers of the seal portion at an end portion of the electric wire. The seal portion formed of the elastic material is primarily molded on the insulation of the electric wire. The housing formed of the insulating resin is secondarily molded to cover the seal portion. In the connector, an elastic material is used for the primarily molded seal portion, so that a waterproof function is imparted and stress during bending of the electric wire is reduced.

As described above, in the waterproof structure of the connector in the related art, a cylindrical elastic material is provided to be in contact with an outer peripheral surface of an electric wire insulation (hereinafter simply referred to as "insulation") of the electric wire. An elastomer or the like for ensuring water tightness is preferably used for the elastic material.

However, in the waterproof structure in the related art, due to a difference in linear expansion coefficient of the insulation, the elastomer and the housing material, a part of the elastomer that is overlapped by the housing may be pushed out of the housing. Therefore, in the waterproof structure in the related art, an appearance defect, wire breakage or a decrease in waterproof function caused by wrinkles may occur.

### SUMMARY

The present invention provides a waterproof structure by which the appearance defect, the wire breakage and the decrease in waterproof function caused by wrinkles can be prevented.

According to an illustrative aspect of the present invention, a waterproof structure includes a seal portion covering around an electric wire to be inserted into a mounting hole of an object to which the electric wire is mounted, the electric wire having a conductor and an insulation covering the conductor, and the seal portion being elastic and electrically insulative and a housing covering an end portion of the electric wire such that the housing overlaps the seal portion, the housing being made of an insulating resin having higher rigidity than the seal portion. The seal portion includes a first portion including one end of the seal portion and over which the housing overlaps the seal portion and a second portion other than the first portion and over which the housing does not overlap the seal portion, the first portion being smaller in outer diameter than the second portion.

### BRIEF DESCRIPTION OF THE DRAWINGS

Fig. 1A is a perspective view of a connector having a waterproof structure according to an embodiment of the present invention;
Fig. 1B is a perspective view of the connector in Fig. 1A in which a housing is omitted;
Fig. 2A is a longitudinal cross-sectional view of the connector shown in Fig. 1A;
Fig. 2B is a main part enlarged view of a seal portion in Fig. 2A;
Figs. 3A and 3B are schematic views illustrating operation of a waterproof structure in the related art in which Fig. 3A is a schematic view illustrating behavior during thermal expansion and Fig. 3B is a schematic view illustrating behavior during thermal contraction;
Fig. 4 is a schematic view of the waterproof structure in which an insulation is deformed due to thermal expansion and contraction;
Fig. 5A is a perspective view of a connector having a waterproof structure according to another embodiment of the present invention;
Fig. 5B is a perspective view of the connector in Fig. 5A in which a housing is omitted;
Fig. 6A is a plan view of the connector shown in Fig. 5A;
Fig. 6B is a cross-sectional view taken along a line A-A in Fig. 6A;
Fig. 7A is a longitudinal cross-sectional view of a seal portion according to a modification; and
Fig. 7B is a longitudinal cross-sectional view of a seal portion according to another modification.

### DETAILED DESCRIPTION

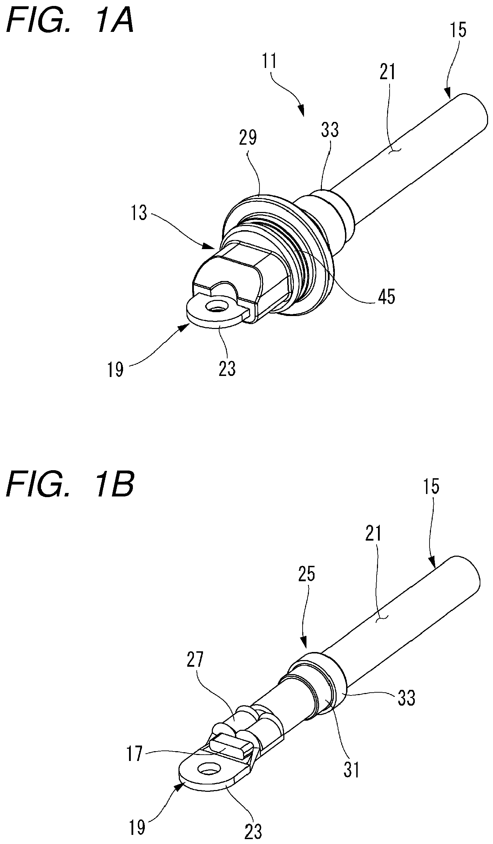

Hereinafter, embodiments of the present invention will be described with reference to the drawings. Fig. 1A is a perspective view of a connector 11 having a waterproof structure according to an embodiment of the present invention, and Fig. 1B is a perspective view of the connector 11 in Fig. 1A in which a housing 13 is omitted. The waterproof structure according to the embodiment is applied to a so-called over-molded connector in which, as shown in Figs. 1A and 1B, a terminal 19 is connected to a conductor 17 of an electric wire 15. An end portion of the electric wire 15 and a part of the terminal 19, which are connection portions where the conductor 17 and the terminal 19 are connected to each other, are covered by an insulating resin molded product.

In the connector 11, the terminal 19 is conductively connected to the end portion of the electric wire 15. The electric wire 15 can be obtained by covering the conductor 17 by the insulation 21. The electric wire 15 is to be inserted into a mounting hole of an object to which the electric wire is mounted (not shown). The electric wire 15 may be an electric wire that can be obtained by covering the conductor 17 only by the insulation 21. The electric wire 15 may also be a shielded electric wire in which an inner insulating cover covering the conductor 17 is covered by a shielding member such as a metal braid and the shielding member is further covered by a jacket.

The terminal 19 is connected and fixed to the conductor 17. The conductor 17 is exposed at the end portion of the electric wire 15. The connection structure between the terminal 19 and the conductor 17 may be any one of a crimping structure, a pressure welding structure, a welding structure, a brazing structure, or the like. In the embodiment, the terminal 19 is exemplified to be a flat terminal in which an electric contact portion 23 is a male tab type, but the terminal 19 may be a round terminal, a Y-shaped terminal, or the like or may be a female terminal having a box-shaped electric contact portion.

The waterproof structure according to the embodiment is configured as a connector 11 in which an insulating elastic member such as a thermoplastic elastomer is primarily molded on the outer periphery of the electric wire 15 as a seal portion 25, and then an insulating resin such as a thermoplastic resin is secondarily molded as a housing 13 on an end portion of the seal portion 25 and a part of the terminal 19.

In the connector 11, the terminal 19 is conductively connected to the conductor 17 at the end portion of the electric wire 15. The terminal 19 includes a connection portion 27 on one side of the terminal 19. The connection portion 27 is connected to the conductor 17. The connection portion 27 of the terminal 19 and the conductor 17 is covered by the housing 13. The electric contact portion 23 on a side opposite to the connection portion 27 in the terminal 19 projects to the outside of the housing 13.

The housing 13 is made of an insulating resin having higher rigidity than the elastic material forming the seal portion 25. The housing 13 integrally covers a part of the seal portion 25 and the connection portion 27 of the terminal 19 at the end portion of the electric wire 15. The housing 13 overlaps and covers at least one end portion of the seal portion 25. The housing 13 includes a flange portion 29. The flange portion 29 protrudes radially outward from the housing 13. The flange portion 29 protrudes from a substantially central portion of the housing 13 along a direction along the electric wire 15. The flange portion 29 is to abut the mounting portion including the mounting hole. A peripheral groove 45 is formed on an outer periphery of the housing 13. The peripheral groove 45 is provided at a position closer to the terminal 19 than the flange portion 29. An annular elastic seal member (not shown) is to be mounted in the peripheral groove 45.

As shown in Fig. 1B, the seal portion 25 is primarily molded. The seal portion 25 is in contact with an outer peripheral surface of the insulation 21. The seal portion 25 has a cylindrical shape having a step portion in which a thin-wall annular portion 31 and a thick-wall annular portion 33 are provided contiguously with each other. The thick-wall annular portion 33 functions as a part of the seal portion 25 as well as a portion (abutted portion) being to be abutted by a burr cutter.

In the secondary molding using an injection molding machine, when the housing 13 is molded, it is necessary to prevent occurrence of burrs caused by leakage of molten resin when the molten resin is put into a mold cavity in a pressed manner. For this reason, the thick-wall annular portion 33 serves as the abutted portion by a burr cutter. The burr cutter includes a plurality of sharp tips to sandwich the electric wire 15. Therefore, in a case where the housing 13 is directly formed on the outer periphery of the electric wire 15, the insulation 21 may be damaged when the electric wire 15 is put in the mold. In the waterproof structure of the embodiment, since the burr cutter provided in a secondary molding mold is to be in contact with the outer periphery of the thick-wall annular portion 33 already molded by the primary molding, the insulation 21 of the electric wire 15 will not be damaged by the burr cutter.

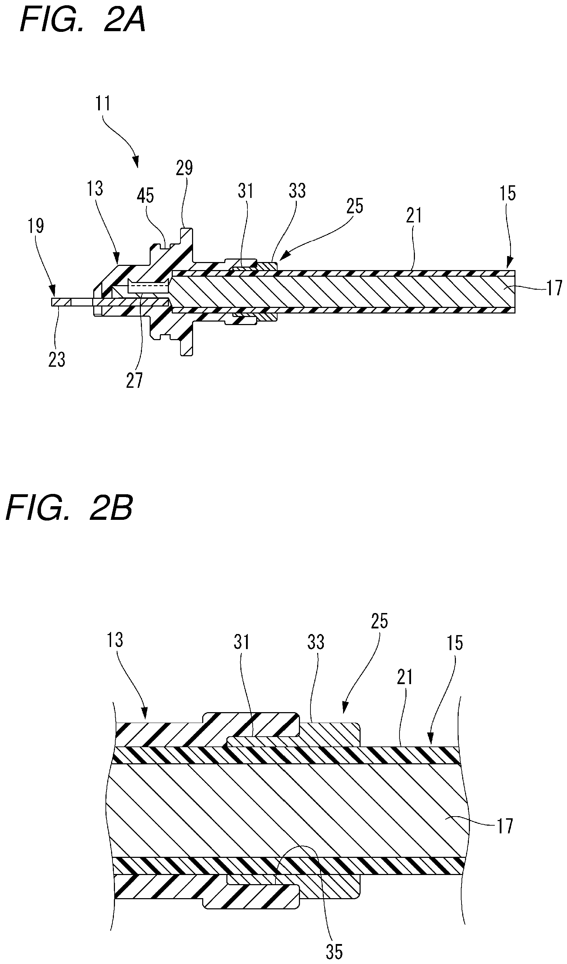

Fig. 2A is a longitudinal cross-sectional view of the connector 11 shown in Fig. 1A, and Fig. 2B is a main part enlarged view of the seal portion 25 in Fig. 2A. In the waterproof structure according to the embodiment, a part of the seal portion 25 that is overlapped by the housing 13 is formed to be smaller in outer diameter than the other part that is not overlapped by the housing 13. That is, the overlapped part of the seal portion 25 is the thin-wall annular portion 31, and the other part is the thick-wall annular portion 33.

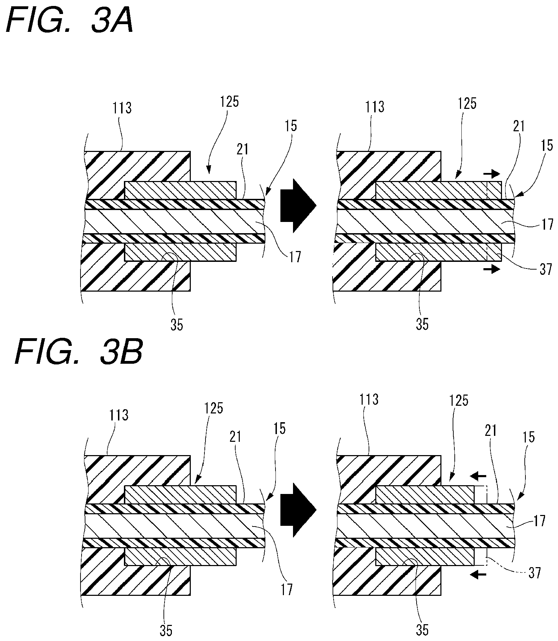

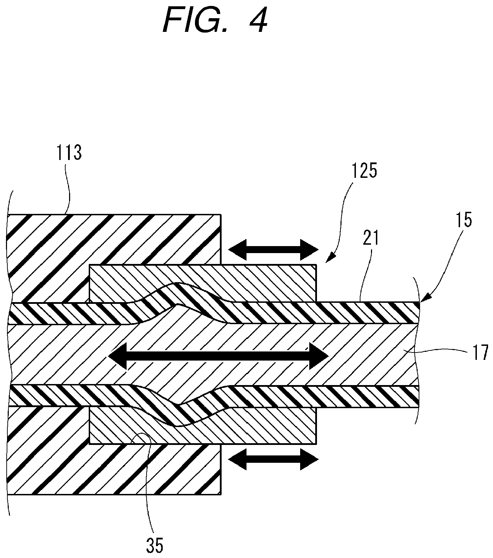

Next, operation of the above configuration will be described. Before describing the operation of the waterproof structure according to the embodiment, operation of a waterproof structure in the related art will be described with reference to Figs. 3A and 3B and Fig. 4.

As shown in Fig. 3A, in the waterproof structure for waterproofing between a mounting hole and an electric wire inserted through the mounting hole, a cylindrical elastic member is provided in contact with the outer peripheral surface of the insulation 21. The elastic member serves as a seal portion 125 for ensuring water tightness. An example of a material of the elastic member can include an elastomer. The seal portion 125 is primarily molded on the outer periphery of the insulation 21. A housing 113 is further secondarily molded on an outer periphery of the seal portion 125 and is in contact therewith. The housing 113 is made of a material, for example, polybutylene terephthalate (PBT) having higher rigidity than that of the seal portion 125. That is, between the electric wire 15 and the housing 113, the conductor 17 of the electric wire 15, the insulation 21, the seal portion 125, and the housing 113 are layered radially outward from a central side. Here, the cylindrical seal portion 125 is provided in an annular groove portion 35 (with reference to Figs. 3A and 3B) of the housing 113 in which one end portion in an axial direction is closed and the other end portion is opened. Therefore, an end portion (a right end portion in Figs. 3A and 3B) of the seal portion 125 extends from the housing 113 to the outside.

This type of waterproof structure to be mounted on a vehicle is exposed to a large temperature change. The temperature change is, for example, in a range from -40°C to 120°C. In the range from -40°C to 120°C, linear expansion coefficients of the members forming the respective structural portions are as follows in a descending order: the conductor 17 (copper alloy or aluminum alloy), the insulation 21 (cross-linked polyethylene), the seal portion 25 (elastomer), and the housing 13 (PBT).

The waterproof structure in the related art may behave such that the appearance and the waterproof performance are degraded due to a temperature change since the members having different linear expansion coefficients are in contact with each other in a layered structure. By each part getting expanded and contracted repeatedly, the members move and the movement (displacement) of the insulation 21 is larger than other members in the above-described layered structure, excluding the conductor 17 considering the conductor 17 does not directly affect the appearance and waterproof performance.

Figs. 3A and 3B are schematic views illustrating the operation of the waterproof structure in the related art. Fig. 3A is a schematic view illustrating behavior during thermal expansion, and Fig. 3B is a schematic view illustrating behavior during thermal contraction. Fig. 4 is a schematic view of the waterproof structure in which the insulation 21 is deformed due to thermal expansion and contraction. In the seal portion 125 in the layered structure, an interface with the insulation 21 follows the movement of the insulation 21 due to the temperature change. Meanwhile, in the seal portion 125 in the layered structure, due to repeated thermal expansion and contraction, as shown in FIG. 3A, a volume in a thickness direction outside the interface is pushed out of the housing 113 from the annular groove portion 35, which overlaps the seal portion 125, to form a bulging portion 37. For this reason, as shown in Fig. 3B, after the insulation 21 that is in contact with the seal portion 125 and has a greater tendency to move than other members is moved due to thermal contraction, the bulging portion 37 is unlikely to return to an original position thereof. Therefore, as shown in Fig. 4, when the expansion and contraction of the seal portion 125 is repeated, wrinkles and deformation occur in the insulation 21. As a result, in the waterproof structure in the related art, the appearance defect or the decrease in waterproof function may occur by the deformation of the insulation 21.

Therefore, in the waterproof structure of the embodiment, a part (thin-wall annular portion 31) of the seal portion 25 that is overlapped by the housing 13 is smaller in outer diameter than the other part (thick-wall annular portion 33) of the seal portion 25. In other words, the thick-wall annular portion 33 is thicker in the radial direction than the thin-wall annular portion 31.

Accordingly, as compared with the seal portion 125 of the waterproof structure in the related art in which inner diameter and outer diameter of the seal portion 125 are the same, in the seal portion 25 according to the embodiment, a wall thickness (amount) in the annular groove portion 35 is smaller than that of the thick-wall annular portion 33, so that an amount of the bulging portion 37 that is to be pushed to the outside of the housing 13 is reduced during thermal expansion.

In the seal portion 25, since the thick-wall annular portion 33 extending to the outside from the annular groove portion 35 of the housing 13 has a larger outer diameter than the thin-wall annular portion 31 in the annular groove portion, the thick-wall annular portion 33 cannot enter the annular groove portion 35 during thermal contraction.

By virtue of this, in the waterproof structure of the embodiment, the displacement (residual deformation) of the seal portion 25 caused by thermal expansion and thermal contraction is prevented. As a result, deformation of the insulation 21 that is in contact with the seal portion 25 is small, and the appearance defect and the decrease in waterproof function are prevented.

A part of the seal portion 25 that extends to the outside of the housing 13 is the thick-wall annular portion 33 and the rigidity of the thick-wall annular portion 33 is increased, which also prevents a shape change of the thick-wall annular portion 33.

In the waterproof structure of the embodiment, the terminal 19 is conductively connected to the conductor 17 that is exposed by stripping the insulation 21 off at the end portion of the electric wire 15. The connection portion 27 of the terminal 19 and the conductor 17 are covered by the secondarily molded housing 13. The electric contact portion 23 of the terminal 19 projects from the housing 13 covering the connection portion 27. An annular elastic seal member (not shown) is to be mounted on the peripheral groove 45 that is formed on the outer periphery of the housing 13. The elastic seal member water-tightly seals the housing 13 and the mounting hole of the mounting portion. Therefore, in the waterproof structure of the embodiment, due to the operation described above, the electric contact portion 23 of the terminal 19 supported by the housing 13 can be directly provided on an inner side of the mounting portion through which the electric wire 15 passes, while preventing the appearance defect of the insulation 21 and the decrease in waterproof function.

Further, in the waterproof structure of the embodiment, since the seal portion 25 extends as an thick-wall annular portion 33 to the outside of the housing 13, the thick-wall annular portion 33 can be used as a part where the burr cutter of the mold contacts. Accordingly, the waterproof structure of the embodiment can prevent the insulation 21 of the electric wire 15 from being damaged by burr cutter during the secondary molding. The thick-wall annular portion 33 can also reduce stress acting on the electric wire 15 when the electric wire 15 led out from a rear end of the housing 13 is bent.

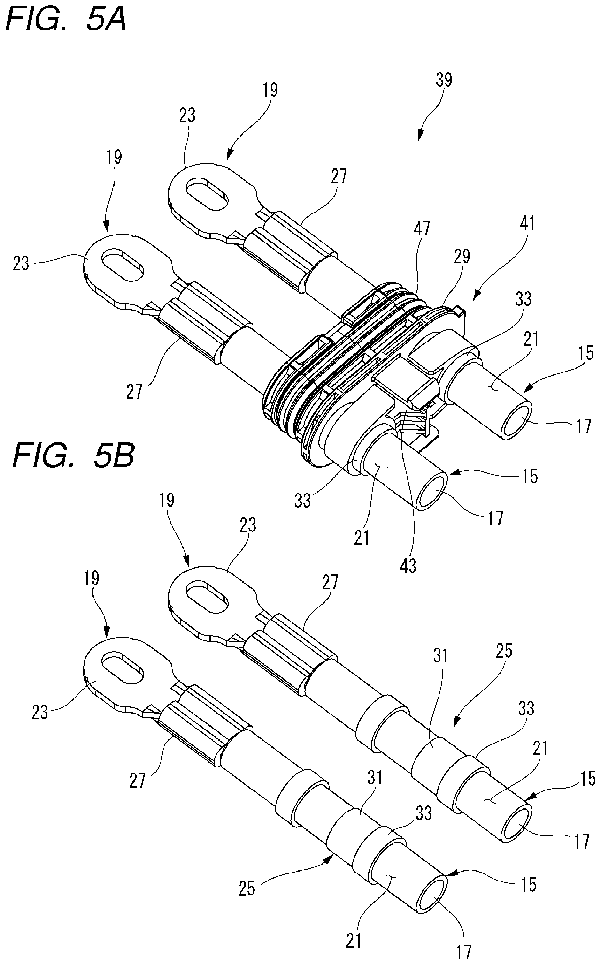

Next, another embodiment of the present invention will be described. Fig. 5A is a perspective view of a connector 39 having a waterproof structure according to the another embodiment of the present invention, and Fig. 5B is a perspective view of the connector 39 in Fig. 5A in which a housing 41 is omitted. In the another embodiment, the same members as those described in the above embodiment are denoted by the same reference numerals, and repetitive descriptions thereof will be omitted. In the waterproof structure of the another embodiment, at the end portion of the electric wire 15, the terminal 19 is conductively connected to the conductor 17 of the electric wire 15 from which the insulation 21 is removed. The housing 41 covers a periphery of the electric wires 15 without the connection portions 27 of the respective terminals 19 and conductors 17.

The connector 39 is provided for a plurality (two in the embodiment) of the electric wires 15 in which the terminals 19 are conductively connected to the conductors 17 respectively. The housing 41 integrally covers a gap between the two electric wires 15. That is, the gap serves as a connection portion 43 that is secondarily molded by an insulating resin by which the housing 41 is molded. The housing 41 includes a flange portion 29 that protrudes radially outward at a substantially central portion of the housing 41 in a direction along the electric wire 15. The flange portion 29 is to abut the mounting portion including the mounting hole.

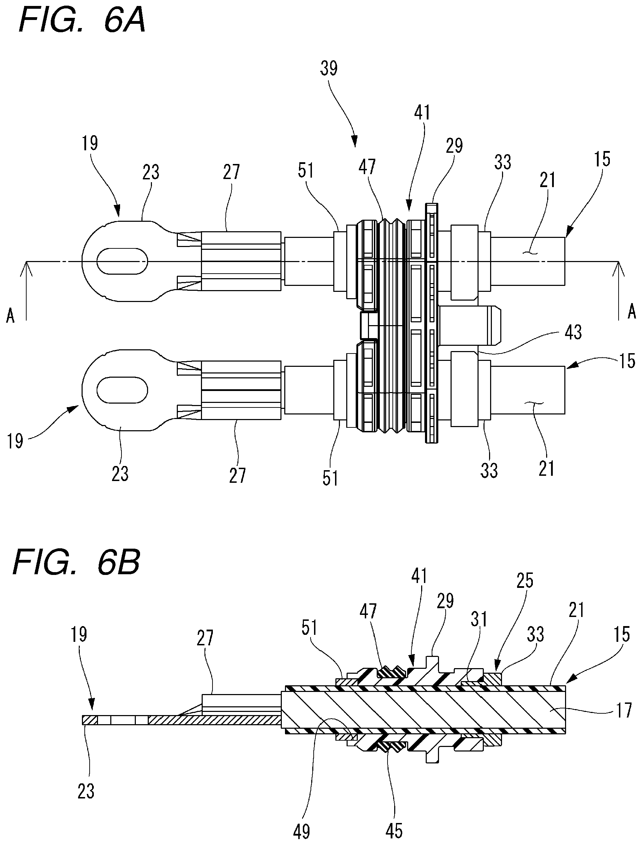

Fig. 6A is a plan view of the connector 39 shown in Fig. 5A, and Fig. 6B is a cross-sectional view taken along a line A-A in Fig. 6A. In the connector 39 according to the another embodiment, the peripheral groove 45 is formed on an outer periphery of the housing 41 at a position closer to the terminal 19 than the flange portion 29. An annular elastic seal member 47 that is to be brought into contact with an inner peripheral wall of the mounting portion is to be mounted on the peripheral groove 45. The elastic seal member 47 water-tightly seals the housing 41 and the inner peripheral wall of the mounting portion. An annular groove portion 49 is formed in the housing 41 on an end surface opposite to the seal portion 25. A second seal portion 51 made of an elastic member is provided in the annular groove portion 49. The second seal portion 51 can be formed by primary molding similarly to the seal portion 25. The second seal portion 51 water-tightly seals the insulation 21 and the housing 41 on the end surface of the housing 41 opposite to the seal portion 25.

In the waterproof structure of the another embodiment, the terminal 19 is conductively connected to the conductor 17 that is exposed by removing the insulation 21 at the end portion of the electric wire 15. The housing 41 covers the electric wires 15 excluding the connection portions 27 at which the respective terminals 19 and conductors 17 are connected to each other. That is, the housing 41 is provided at a position of the electric wire 15 in the middle of the electric wire 15, the position being away from the terminal 19 conductively connected to the end portion of the electric wire 15. The annular elastic seal member 47 is mounted on the peripheral groove 45 that is on the outer periphery of the housing 41. The elastic seal member 47 water-tightly seals the housing 41 and the mounting hole of the mounting portion. Therefore, in the waterproof structure of the another embodiment, due to the operation described above, the electric wire 15 in which the terminal 19 is conductively connected with the end portion thereof can be passed through the mounting portion in a water-tight structure while preventing the appearance defect of the insulation 21 and the decrease in waterproof function.

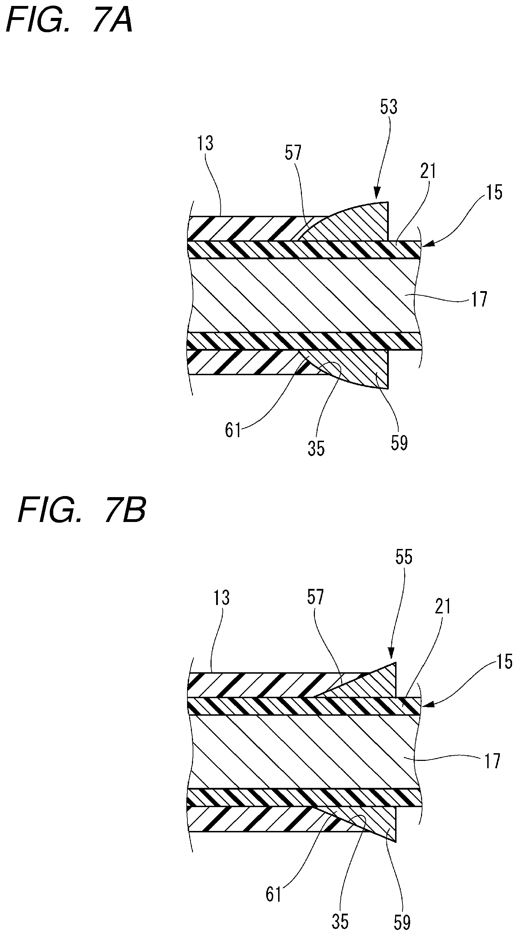

Next, modifications of the waterproof structure according to the embodiment and the another embodiment will be described. Fig. 7A is a longitudinal cross-sectional view of a seal portion 53 according to a modification, and Fig. 7B is a longitudinal cross-sectional view of a seal portion 55 according to another modification. In the waterproof structures according to the modifications, as shown in Figs. 7A and 7B, at least overlapped parts of the seal portions 53, 55 each include a tapered surface 57 whose outer diameter gradually decreases toward the housing 13.

The tapered surface 57 can be set to a convex curved surface as shown in Fig. 7A. The tapered surface 57 may be set to a flat inclined surface as shown in Fig. 7B. In addition, although not shown, the tapered surface 57 can also be set to a concave curved surface.

In the waterproof structures according to the modifications, the seal portions 53, 55 each include the tapered surface 57, and thus a volume of an thin-wall annular portion 61 connected with an thick-wall annular portion 59 gradually decreases toward the housing 13. In other words, the volume of the thin-wall annular portion 61 gradually increases in a direction away from the housing 13. Even when the thin-wall annular portion 61 is pushed by the above-described operation, since the volume of the seal portions 53, 55 in the pushing direction is increased, a push-out amount of the thin-wall annular portion 61, for which the thin-wall annular portion 61 has been pushed to the outside of the housing 13 during thermal expansion, is decreased.

In the waterproof structure according to the above modifications, the seal portion 25 together with the insulation 21 is drawn in a direction toward the housing 13 during thermal contraction. The thin-wall annular portion 61 enters the annular groove portion 35 of the housing 13 due to the displacement in the drawing direction. At this time, since the thin-wall annular portion 61 is in contact with an inner peripheral wall of the housing 13 with the tapered surface 57 that is reduced in diameter toward a direction to which the thin-wall annular portion 61 enters the annular groove 35, the insulation 21 is pressed by a reaction force from the housing 13. Accordingly, the housing 13 and the thin-wall annular portion 61, the thin-wall annular portion 61 and the insulation 21, respectively contact with each other tightly by virtue of the reaction force from the housing 13.

Due to the operation, in the waterproof structures according to the above modifications, the displacement of the seal portion 25 caused by thermal expansion and thermal contraction is prevented. As a result, the insulation 21 that is in contact with the seal portion 25 is less deformed, and the appearance defect and the decrease in waterproof function are prevented.

Therefore, according to the waterproof structures of the respective embodiments described above, the appearance defect and wire breakage of the electric wire 15 and the decrease in waterproof function caused by wrinkles of the insulation 21 can be prevented.

While the present invention has been described with reference to certain exemplary embodiments thereof, the scope of the present invention is not limited to the exemplary embodiments described above, and it will be understood by those skilled in the art that various changes and modifications may be made therein without departing from the scope of the present invention as defined by the appended claims.

According to the exemplary embodiments described above, a waterproof structure includes a seal portion (25) covering around an electric wire (15) to be inserted into a mounting hole of an object to which the electric wire is mounted, the electric wire having a conductor and an insulation covering the conductor, and the seal portion being elastic and electrically insulative and a housing (13) covering an end portion of the electric wire (15) such that the housing (13) overlaps the seal portion (25), the housing (13) being made of an insulating resin having higher rigidity than the seal portion. The seal portion (25) includes a first portion (thin-wall annular portion 31) including one end of the seal portion (25) and over which the housing (13) overlaps the seal portion (25) and a second portion (thick-wall annular portion 33) other than the first portion and over which the housing (13) does not overlap the seal portion (13), the first portion being smaller in outer diameter than the second portion.

According to the waterproof structure configured as above, the overlapped part of the seal portion is the thin-wall annular portion, and the other part is the thick-wall annular portion. Accordingly, in the seal portion, as compared with the waterproof structure in the related art in which inner diameter and outer diameter of the seal portion, throughout an entire longitudinal direction of the seal portion, are the same, a wall thickness (amount) of the thin-wall annular portion (overlapped part) is smaller than that of the thick-wall annular portion, and an amount of being pushed out of the housing during thermal expansion is reduced. In the seal portion, since the thick-wall annular portion extending out from the annular groove portion (a part overlapping the thin-wall annular portion) of the housing has a larger outer diameter than the thin-wall annular portion in the annular groove portion, the thick-wall annular portion cannot enter the annular groove portion during thermal contraction. Due to the operation, in the waterproof structure having the configuration, the displacement (residual deformation) of the seal portion caused by thermal expansion and thermal contraction is prevented. As a result, the insulation that is in contact with the seal portion is less deformed, and the appearance defect and the decrease in waterproof function are prevented. Since a part of the seal portion that extends to the outside of the housing serves as the thick-wall annular portion, the rigidity of the thick-wall annular portion is increased, a shape change of the thick-wall annular portion can also be prevented.

In the waterproof structure described above, at least the first portion (the thin-wall annular portion 31) of the seal portion (25) may include a tapered surface (57) along which an outer diameter of the at least the first portion (the thin-wall annular portion 31) is gradually decreased toward the housing (13).

According to the waterproof structure configured as above, a volume of the thin-wall annular portion of the seal portion gradually decreases toward the housing. In other words, the volume of the thin-wall annular portion gradually increases in a direction away from the housing. Even if the thin-wall annular portion is pushed out by the above-described operation, the rigidity of the seal portion is increased since the volume of the seal portion on the pushing direction side is increased. Accordingly, a push-out amount of the thin-wall annular portion is decreased. In the waterproof structure having the configuration, the seal portion together with the insulation is drawn in a direction toward the housing during thermal contraction. The thin-wall annular portion enters the annular groove portion of the housing due to the displacement in the drawing direction. At this time, since the thin-wall annular portion is in contact with an inner peripheral wall of the housing with the tapered surface that is reduced in diameter toward a direction to which the thin-wall annular portion enters the annular groove portion, the insulation is pressed by a reaction force from the housing. Accordingly, the housing and the thin-wall annular portion and the thin-wall annular portion and the insulation respectively contact with each other tightly by virtue of the reaction force from the housing. Due to the operation, in the waterproof structure having the configuration, the displacement of the seal portion caused by the difference between thermal expansion and thermal contraction is prevented. As a result, the insulation that is in contact with the seal portion is less deformed, and the appearance defect and the decrease in waterproof function are prevented.

In the waterproof structure above, at the end portion of the electric wire (15), a terminal (19) may be electrically connected to the conductor (17) of the electric wire (15) extending out of the insulation (21). The terminal (19) may include a connection portion (27) on one side of the terminal (19), the connection portion (27) being connected to the conductor (17) and covered by the housing (13), and an electric contact portion (23) on an opposite side of the terminal (19), the electric contact portion (23) extending out of the housing (13).

According to the waterproof structure configured as above, the terminal is conductively connected to the conductor that is exposed by removing the insulation at the end portion of the electric wire. The connection portion of the terminal and the conductor is covered by the secondarily molded housing. An electric contact portion of the terminal projects from the housing that covers the connection portion. According to the waterproof structure having the configuration, due to the operation described above, the electric contact portion of the terminal supported by the housing can be directly provided on an inner side of the mounting portion through which the electric wire passes, while preventing the appearance defect of the insulation and the decrease in waterproof function.

In the waterproof structure described above, at the end portion of the electric wire (15), a terminal (19) may be electrically connected to the conductor (17) of the electric wire (15) extending out of the insulation (21). The terminal (19) may include a connection portion (27), at which the terminal (19) is connected to the conductor (17). The housing (13) may cover around the electric wire (15) but does not cover the connection portion (27).

According to the waterproof structure configured as above, the terminal is conductively connected to the conductor that is exposed by removing the insulation at the end portion of the electric wire. The housing covers the periphery of the electric wire without the connection portion of the terminal and conductor. That is, the housing is provided at a position of the electric wire in the middle of the electric wire, the position being away from the terminal conductively connected to the end portion of the electric wire. According to the waterproof structure having the configuration, due to the operation described above, the electric wire in which the terminal is conductively connected with the end portion thereof can be passed through the mounting portion in a water-tight structure, while preventing the appearance defect of the insulation and the decrease in waterproof function.

## Claims

1. A waterproof structure comprising:
a seal portion covering around an electric wire to be inserted into a mounting hole of an object to which the electric wire is mounted, the electric wire having a conductor and an insulation covering the conductor, and the seal portion being elastic and electrically insulative; and
a housing covering an end portion of the electric wire such that the housing overlaps the seal portion, the housing being made of an insulating resin having higher rigidity than the seal portion,
wherein the seal portion comprises a first portion including one end of the seal portion and over which the housing overlaps the seal portion and a second portion other than the first portion and over which the housing does not overlap the seal portion, the first portion being smaller in outer diameter than the second portion.

2. The waterproof structure according to claim 1
wherein at least the first portion of the seal portion includes a tapered surface along which an outer diameter of the at least the first portion is gradually decreased toward the housing.

3. The waterproof structure according to claim 1 or 2,
wherein at the end portion of the electric wire, a terminal is electrically connected to the conductor of the electric wire extending out of the insulation,
wherein the terminal comprises a connection portion on one side of the terminal, the connection portion being connected to the conductor and covered by the housing, and an electric contact portion on an opposite side of the terminal, the electric contact portion extending out of the housing.

4. The waterproof structure according to claim 1 or 2,
wherein at the end portion of the electric wire, a terminal is electrically connected to the conductor of the electric wire extending out of the insulation,
wherein the terminal comprises a connection portion, at which the terminal is connected to the conductor, and
wherein the housing covers around the electric wire but does not cover the connection portion.
